Europäisches Patentamt

European Patent Office

Office européen des brevets

(19)

(11) Publication number: **0 078 779**
**B1**

# (12) EUROPEAN PATENT SPECIFICATION

(45) Date of publication of patent specification: 04.03.87

(51) Int. Cl.⁴: **A 47 J 31/40**

(21) Application number: 82830271.1

(22) Date of filing: 28.10.82

(54) **A device for the water feeding and for the filtering of the coffee infusion in coffee-machines particularly of automatic type.**

(30) Priority: 04.11.81 IT 2484481

(43) Date of publication of application:
11.05.83 Bulletin 83/19

(45) Publication of the grant of the patent:
04.03.87 Bulletin 87/10

(84) Designated Contracting States:
AT CH DE FR GB LI

(56) References cited:
FR-A-2 202 668
FR-A-2 347 958
GB-A-1 058 750
US-A-2 517 073

(73) Proprietor: Grossi, Lucio
Via Mazzini 29
I-24100 Bergamo (IT)

(72) Inventor: Grossi, Lucio
Via Mazzini 29
I-24100 Bergamo (IT)

(74) Representative: Raimondi, Alfredo, Dott. Ing.
Prof et al
Studio Tecnico Consulenza Brevetti Piazzale
Cadorna 15
I-20123 Milano (IT)

Courier Press, Leamington Spa, England.

## Description

The present invention relates to a device for the water feeding and for the filtering of the coffee infusion in coffee-machines particularly of automatic type, in accordance with the pre-characterising part of claim 1, comprising means for the inlet of the hot water into the chamber containing the coffee powder (hereinafter called the infusing chamber) and means for the coming out of the coffee infusion obtained by the passing of said hot water through the coffee powder. These means consist of annular ports between the lateral wall of the piston and the wall of the infusing chamber, on the lower end of the piston and between the wall of the delivering chamber and the outer rim of a disk as well as in the middle of the disk, said means being situated in the upper and lower areas of the infusing chamber respectively.

The annular ports which are present on the piston and on the disk (hereinafter called the filtering disk) are such as to produce passing areas which are considered as the optimum in order to obtain a correct infusion of the coffee powder.

As it is known, the relevant development achieved by the coffee-machines particularly of automatic type, with which very numerous coffees are distributed also in a short time or which are not used for a long time, has brought considerable problems concerning the attending, the set-up and the maintenance of the machines themselves from skilled personnel not being usually at disposal of the user.

One of the most delicate points of this maintenance consists of the fact that it is necessary, in order to keep constant the quality of the delivered coffee, to keep constant and unchanged the working conditions of the machine at the moment in which these working conditions are the best possible ones foreseen by the manufacturer.

Usual coffee-machines are equipped with infusion passing filters provided with small holes having a some tenth millimeter diameter which tend, with the use of the machine, to be clogged both by the deposit of salts contained in the water and by the deposit of hard or tarry substances contained in and deriving from the coffee itself.

Likewise the inlet holes of the water into the delivering chamber containing the coffee powder are usually reduced in size both by the presence of calcareous fouling which forms along the rims of the holes and by the presence of tarry deposits deriving from the constitution of the coffee itself. These deposits cause a phenomenon which can be noticed in any coffee-machine and which appears in a constant form depending on the use of the machine itself.

At the beginning, when the machine is newly set-up or newly manufactured, it does not produce good quality coffee infusions but it generally produces coffees in which the passing of the water through the coffee powder is very quick with a consequent scarce exploitation of the powder. This is due to the fact that the passing holes both for the feeding of the water and for the filtering of the infusion are of the largest possible dimension, namely that one of manufacture, and they are still not in any way subjected to reduction.

With the use of the machine the passing dimensions of the holes are more and more reduced by several deposits and it happens at a certain point that the holes of the filter reach an optimum dimension according to which the water is kept in contact with the coffee powder for the correct time, so allowing an exploitation of the substances of the coffee that the beverage is considered as an excellent quality one.

On continuing to use the machine, the dimensions of the holes of the filter continue to narrow so that the total passing surface of the infusion becomes scarce and the direct consequence is to have an inferior quality coffee and in particular without cream.

At this point it is necessary that the replacement of the filters and the cleaning of the passages of the hot water be made with a considerable loss of time without considering that these machines, generally of automatic type, are located in places far from each other as for example in factories, offices, houses, etc. and it becomes extremely onerous to have to call at the places in which various machines are used in order to replace the damaged parts. On the other hand, it is also very difficult for the user to establish the moment in whch the filters must be replaced, depending this on many factors so that an automatic machine set-up at a community, a factory or the like can correctly work only for a short period of time in the middle from the starting period in which the coffee is less good owing to the excessive passing of the water to the last period in which it becomes as much desirable for the opposite reason, namely owing to the scarce passing of the water.

Automatic coffee dispensing machines are known, as described, for instance, in FR—A—2 202 668 and in FR—A—2 347 958, but in the first patent a device is shown which uses multi-hole filtering elements, so facing the problems of occlusion of the holes, as already described; in FR—A—2 347 958 annular crown filtering elements are shown, but these elements are static, and the free section for the flow of the liquids is progressively reduced by the above mentioned deposits and requires periodic cleanings. The features of the pre-characterising part of claim 1 are known from FR—A—2 347 958.

The invention as claimed totally eliminates these disadvantages maintaining constant in time both the delivering area of the hot water and the filtering area of the coffee infusion, so that both at the beginning of the working of the machine and after an indefinite working period these areas remain exactly those which were foreseen by the manufacturer as the optimum, said areas being automatically maintained constant through the use itself of the machine so that no maintenance is required for its correct working.

The device for the water feeding and for the filtering of the coffee infusion in coffee-machines particularly of automatic type, as set out in the pre-characterising part of claim 1 is provided with the features of the characterising part of said claim.

The shutting element in the piston is integral with a non return valve adapted to be opened by the pressure of the water to be delivered when it attains a suitable value.

The maximum dimensions of the annular port between the piston and the delivering chamber, the hollow space between the edge of the hole of the piston and the shutting element of the delivering valve, the annular space between the disk central hole and the shutting element and the annular space between the disk the infusing chamber are not large enough to allow the passing of the coffee powder into the infusion, said coffee powder having a predetermined average granulometry, except for inevitable traces of very fine powder, the total passing space for the infusion, equivalent to the optimum area required, being attainable by varying the inner diameter of the delivering chamber and/or the outer diameter of the piston and/or the diameter of the hole and of the corresponding shutting element of the disk.

These and other features will be evident from the detailed specification of an embodiment of the device according to the invention applied to an automatic machine for coffee production, which is illustrated in the enclosed drawing, in which:

Figure 1 is the detail of the delivering unit in the working condition for the production of the coffee beverage.

Figure 2 is the same unit in the condition of ejection of the already exausted coffee grounds tablet, and

Figure 3 is an enlarged particular of Figure 1 including the end of the piston and the filtering disk.

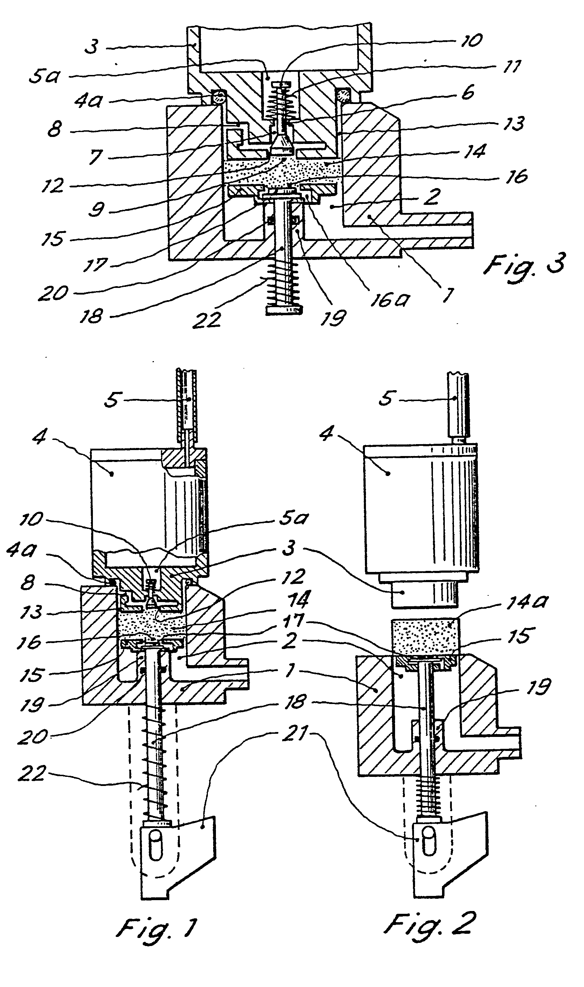

With reference to Figures 1 and 3 the coffee production unit consists of a body 1 having a cylindrical hollow 2 which is called an infusing chamber, in which enters a piston 3 of a feeding unit 4 of the hot water under pressure coming in any known manner from a duct 5 and which arrives at an inner hollow 5a and able to pass, under pressure, through a gauged neck 6 into a small chamber 7 inside the piston 3. The small chamber 7 is provided with a duct 8 which opens on the lateral wall of the piston 3 and with a hole 9 having a circular section which opens on the frontal wall of the piston 3. The duct 8 and the hole 9 are shut with respect to the small chamber 7 by a non-return valve 10 pressed by a spring 11.

Port 12 is the open space present between the edge of the hole 9 and the lower end of a shutting element of the valve 10. The hollow space between the piston 3 and the cylinder 1 sealing ring 4a, into which opens the duct 8, constitutes a port 13. The dimensions of said ports 12 and 13 are such that coffee powder of the usually used granulometry can not enter inside the piston 3.

In Figures 1 and 3 it is noted that the coffee powder 14 lays on a disk 15 which is called a filtering disk and is compressed by the piston 3 when it is lowered until the desired compactness of the coffee powder is obtained.

The filtering disk 15 consists of a solid disk which is provided with a central hole 16 in which a shutting element 17 placed at the end of a pin 18 slides. Between the hole 16 and the shutting element 17 there is a hollow space which communicates with the rear part of the disk 15 through a duct 16a.

According to the invention the diameter of the outer periphery of the disk 15 is smaller than the diameter of the infusing chamber 2 and the shutting element 17 has a smaller diameter than that of the hole 16, the values being such that the respective open areas, available for the passing of the liquid, substantially correspond to the desired area for the optimum obtaining of the coffee beverage. In any case, the open areas must be such as to be smaller than the minimum granulometry foreseen for the coffee powder.

With reference to Figure 2 there is the same unit as that shown in Figure 1 at the ejection stage of the coffee grounds tablet 14a and the same elements are shown with the same references. It is noted that the disk 15 is supported by the pin 18 sliding inside the bottom of the block of the body 1 in a support 19 provided with appropriate sealing members 20 and that the disk 15 can be lifted through known means, for example by means of a cam or the like 21. A spring 22 repositions the disk 15 after the ejection of the exhausted tablet 14a. It is also noted that the compressing piston 3 is completely extracted from the body 1 and the disk 15 has been lifted by the cam 21 to the upper outlet level from the body 1.

When the exhausted coffee powder tablet 14a is at the upper level it can be extracted in any manner (not represented).

The working is the following:

Having brought the coffee powder 14 into the infusing chamber 2 and having lowered the piston 3 until the required compression of the coffee powder pressed between the frontal surface of the piston 3 and the filtering disk 15 is obtained, the hot water under pressure, fed by the duct 5, passes through the gauged neck overcoming the action of the valve 10 pressed by the spring 11 and through the lateral duct 8, the port 13 and the port 12, is delivered out of the piston 3 and is distributed on the coffee powder 14 below. When the infusion is already partially obtained, it is pushed to pass through the annular aperture between the disk 15 and the chamber 2 and through the annular aperture between the edge defining the hole 16 and the shutting element 17 which both, offering a certain resistance to the passing due to the inflow capacity section left open, operate so that the outlet of the infusion takes place at the proper rate as provided for by the manufacturer through the arrangement of the dimensions of the areas left between the walls.

Figure 2 shows the stage subsequent to the delivering of the infusion of the beverage in which the filtering disk 15 has been lifted by the cam 21 and the coffee grounds tablet 14a is ready for its ejection. During this movement the disk 15 makes an axial stroke and pushing upwardly the compacted grounds tablet 14a cleans the inner walls of the delivering chamber 2 eliminating any fouling and any calcareous deposit. So is obtained the automatic cleaning after each coffee delivery of the parts which could be damaged owing to the foulings of gummy or resisting deposits deriving from the coffee powder or from the water and thus maintaining constant the quality of the delivered beverage.

It is understood that numerous variants within the scope of the appended claims may be brought to what above described and illustrated particularly with regard to the type of coffee-machine to which the delivering device and filtering device should be applied. In particular there may be changes in the arrangement of the delivering unit as well as in the feeding system of the water under pressure, without therefore going outside the limits of the present invention as defined by the appended claims. For example the water feeding can take place in the unit 4 from the pipe 5 without being under pressure and inside the unit itself there can be provided in a manner known per se a sliding piston provided with a valve such as to compress the water which was brought in from the pipe 5 to the desired pressure. Again in a known manner the feeding water can be brought to the desired pressure outside the unit and then brought in a known manner inside the unit 4 when it is requested for the delivery of the coffee infusion.

**Claims**

1. A device for the water feeding and for the filtering of the coffee infusion in coffee-machines particularly of automatic type, comprising a coffee powder compressing piston (4), an infusing chamber (2) and a disk (15) below the coffee powder for supporting it and filtering the infusion, an annular space around the disk being open to the passing of the coffee infusion, the filtering disk (15) being movable axially at the end of the coffee delivery for the ejection of the exhausted coffee powder and returning then to its earlier position to allow a new bringing in of the coffee powder and the repetition of the delivering cycle, characterized in that there is an annular port (13) formed between the lateral surface of the coffee powder compressing piston (4) and the lateral surface of the infusing chamber (2) as well as a hollow space (12) between the edge defining a hole situated on the end of the piston and a shutting element (10) sliding inside it, in that the feeding of the hot water under pressure to the compressed powder (14) takes place through this annular space and this hollow space, and in that the disk presents a central hole (16) in which a shutting element (17) slides, leaving an annular space between it and the disk central hole, said disk having an external diameter a little smaller than the inner diameter of the infusing chamber (2), the annular space around the disk being between the disk central hole and the shutting element and this annular space and the annular space between the disk and the infusing chamber being open to the passing of the coffee infusion, and having an area in total equivalent to the optimum area required to obtain the desired strength of infusion, the filtering disk (15) being lifted for the ejection of the exhausted coffee powder with this axial movement taking place together with the sliding of the shutting element (15) in the hole in the filtering disk so that the sliding motions are produced for cleaning the walls of the hole and of the infusing chamber, the filtering disk returning then to its earlier lower position.

2. A device according to claim 1, characterized in that the shutting element in the piston is integral with a non return valve adapted to be opened by the pressure of the water to be delivered when it attains a suitable value.

3. A device according to either one of the previous claims, characterized in that the maximum dimensions of the annular port between the piston and the delivering chamber, the hollow space between the edge of the hole of the piston and the shutting element of the delivering valve, the annular space between the disk central hole and the shutting element and the annular space between the disk the infusing chamber are not large enough to allow the passing of the coffee powder into the infusion, said coffee powder having a predetermined average granulometry, except for inevitable traces of very fine powder, the total passing space for the infusion, equivalent to the optimum area required, being attainable by varying the inner diameter of the delivering chamber and/or the outer diameter of the piston and/or the diameter of the hole and of the corresponding shutting element of the disk.

**Patentansprüche**

1. Vorrichtung zum Žuführen des Wassers und zum Filtern der Kaffeebrühe in Kaffeemaschinen, insbesondere Kaffeeautomaten, mit einem Kaffeepulver-Druckkolben (4), einer Brühkammer (2) und einer Scheibe (15) unterhalb des Kaffeepulvers, die das Kaffeepulver aufnimmt und die Brühe filtert, einem die Scheibe umgegebenden Ringraum, der geöffnet ist, um die Kaffeebrühe passieren zu lassen, wobei die Filterscheibe (15) am Ende der Kaffeeausgabe in axialer Richtung bewegbar ist, um das verbrauchte Kaffeepulver auszustoßen, und anschließend in die vorhergehende Stellung zurückkehrt, um neues Kaffeepulver eingeben und den Ausgabezyklus wiederholen zu können, dadurch gekennzeichnet, daß zwischen der Seitenfläche des Kaffeepulver-Druckkolbens (4) und der seitlichen Fläche der Brühkammer (2) einer Ringöffnung (13) sowie zwischen der ein Loch an dem Ende des Kolbens definierenden Kante und einem darin verschieblichen Verschlußelement (10) ein Hohlraum (12) gebildet ist, daß das Zuführen des unter Druck stehenden heißen Wassers zu dem zusammengepreßten Pulver (14) über den Ringraum und den Hohlraum erfolgt, und daß die Scheibe ein Mittelloch (16) aufweist, in der das Verschlußelement (17) verschieblich ist, wobei es zwischen sich und dem Scheiben-Mittelloch einen Ringraum freiläßt, wobei die Scheibe einen Außendurchmesser aufweist, der etwas kleiner ist als der Innendurchmesser der Brühkammer (2), der Ringraum um die Scheibe zwischen dem Scheiben-Mittelloch und dem Verschlußelement liegt, wobei dieser Ringraum und der Ringraum zwischen der Scheibe und der Brühkammer zum Passieren der Kaffeebrühe geöffnet sind und eine Gesamtfläche aufweisen, die äquivalent ist der optimalen Fläche, die benötigt wird, um die gewünschte Stärke der Brühe zu erhalten, und wobei das Anheben der Filterscheibe (15) zum Auswerfen des verbrauchten Kaffeepulvers mit dieser axialen Bewegung einhergeht mit dem Verschieben des Verschlußelements (15) in dem Loch der Filterscheibe, so daß die Verschiebebewegungen zum Reinigen der Wände des Lochs und der Brühkammer dienen, bevor die Filterscheibe in ihre frühere untere Stellung zurückkehrt.

2. Vorrichtung nach Anspruch 1, dadurch gekennzeichnet, daß das Verschlußelement in dem Kolben einstückig mit einem Rückschlagventil ausgestattet ist, welches durch den Druck des zuzuführenden Wassers geöffnet wird, wenn der Druck einen geeigneten Wert erreicht.

3. Vorrichtung nach einem der vorhergehenden Ansprüche, dadurch gekennzeichnet, daß die maximalen Abmessungen der Ringöffnung zwischen dem Kolben und der Ausgabekammer, der Hohlraum zwischen der Kante des Lochs des Kolbens und dem Verschlußelement des Dosierventils, der Ringraum zwischen dem Scheiben-Mittelloch und dem Verschlußelement und der Ringraum zwischen der Scheibe und der Brühkammer nicht groß genug sind, um — mit Ausnahme von unvermeidlichen Spuren sehr feinen Pulvers — das eine vorbestimmte mittlere Körnigkeit aufweisende Kaffeepulver in die Brühe zu lassen, wobei der Gesamt-Durchlaßraum für die Brühe entsprechend der benötigten optimalen Fläche dadurch erreicht wird, daß der Innendurchmesser der Ausgabekammer und/oder der Außendurchmesser des Kolbens und/oder der Durchmesser des Lochs und des entsprechenden Verschlußelementes der Scheibe variiert werden.

**Revendications**

1. Un dispositif d'alimentation en eau et de filtrage de l'infusion de café dans des machines à faire le café, en particulier de type automatique, comprenant un piston (4) de compression de poudre de café, une chambre d'infusion (2) et un disque (15) situé au-dessous de la poudre de café pour la supporter et filtrer l'infusion, un intervalle annulaire autour du disque, ouvert pour permettre le passage de l'infusion de café, le disque de filtrage (15) étant mobile axialement à la fin de la distribution de café pour éjecter la poudre de café épuisée, et revenant alors dans sa position antérieure pour permettre une nouvelle introduction de la poudre de café et la répétition du cycle de distribution, caractérisé en ce qu'il comporte un passage annulaire (13) formé entre la surface latérale du piston (4) de compression de la poudre de café et la surface latérale de la chambre d'infusion (2), ainsi qu'un intervalle creux (12) compris entre le bord délimitant un trou situé à l'extrémité du piston et un élément d'obturation (10) coulissant intérieurement, en ce que l'alimentation en eau chaude sous pression de la poudre comprimée (14) a lieu par cet intervalle annulaire et cet intervalle creux, et en ce que le disque présente un trou central (16) dans lequel coulisse un élément d'obturation (17), en laissant un intervalle annulaire entre lui-même et le trou central du disque, ledit disque présentant un diamètre extérieur un peu inférieur au diamètre intérieur de la chambre d'infusion (2), l'intervalle annulaire entourant le disque étant compris entre le trou central du disque et l'élément d'obturation et cet intervalle annulaire compris entre le disque et la chambre d'infusion étant ouverts pour permettre le passage de l'infusion de café, et présentant une aire équivalente au total à l'aire optimale requise pour obtenir la concentration désirée de l'infusion, le disque de filtrage (15) montant pour l'éjection de la poudre de café épuisée, ce mouvement axial ayant lieu en même temps que le coulissement de l'élément d'obturation (15) dans le trou du disque de filtrage, de sorte que les mouvements de coulissement sont engendrés pour nettoyer les parois du trou et de la chambre d'infusion, le disque de filtrage revenant alors dans sa position inférieure antérieure.

2. Un dispositif selon la revendication 1, caractérisé en ce que l'élément d'obturation du piston fait corps avec un clapet de non-retenue susceptible d'être ouvert par la pression de l'eau à débiter lorsqu'elle atteint une valeur appropriée.

3. Un dispositif selon l'une des revendications précédentes, caractérisé en ce que les dimensions maximales du passage annulaire compris entre le piston et la chambre de distribution de l'intervalle creux compris entre le bord du trou du piston et l'élément d'obturation de la soupape de distribution, de l'intervalle annulaire compris entre le trou central du disque et l'élément d'obturation et de l'intervalle annulaire compris entre la disque et la chambre d'infusion ne sont pas suffisantes pour permettre le passage de la poudre de café dans l'infusion, ladite poudre de café présentant une dimension granulométrique moyenne prédéterminée, sauf en ce qui concerne des traces de poudre très fines inévitables, l'intervalle de passage total de l'infusion, équivalent à l'aire optimale requise, pouvant être obtenu par variation du diamètre intérieur de la chambre de distribution et/ou du diamètre extérieur du piston et/ou du diamètre et de l'élément d'obturation correspondant du disque.

Fig. 3

Fig. 1

Fig. 2